# EUROPEAN PATENT APPLICATION

(11) **EP 1 868 201 A1**
(43) Date of publication of application: **19.12.2007**
(21) Application number: 07252212.1
(22) Date of filing: 30.05.2007
(51) Int. Cl.: G11B 27/00, G11B 27/10, G11B 27/11, G06F 17/24, G06F 17/30, H04N 7/173, G06F 3/033, G06F 3/03

(54) **Contents metadata registering method, registering system, and registering program**

(30) Priority: 14.06.2006 JP 2006164117
(71) Applicant: Hitachi Consulting Co. Ltd., Minato-ku Tokyo (JP)
(72) Inventor: Wakabayashi, Akira, Tokyo 100-8220 (JP); Okayama, Nobuya, Tokyo 100-8220 (JP); Igawa, Masaru, Tokyo 100-8220 (JP)
(74) Representative: Calderbank, Thomas Roger

(57) **Abstract**

A content metadata registering method for registering metadata utilized during a retrieving operation at a specific position on a time axis of content is comprised of: a step for storing a content play log which contains a distribution starting time instant when the content is played, a time code when a distribution is commenced, a playing direction, and a playing speed into a storage apparatus (108); a step for storing information which contains an input starting time instant of the metadata and the inputted metadata into a storage apparatus (109); and a step for calculating a time code at the input starting time instant of the metadata stored in the storage apparatus (109) based upon the information of the content play log stored in the storage apparatus (108), and for storing the metadata in combination with the calculated time code into the storage apparatus (108).

## Description

The present invention generally relates to a content metadata registering technical idea. More specifically, the present invention is directed to a content metadata registering method, a content metadata registering system, and a content metadata registering program, which are capable of registering metadata used in retrieving operations in specific positions on a time axis of streaming-distributed video/audio content, while digital pens are employed.

Very recently, with respect to content holders which hold a huge amount of video/audio contents, management targets are how to utilize these contents held in the content holders in an effective manner. In order to effectively utilize a very large amount of contents, content must be retrieved in a higher efficiency.

In content holders such as broadcasting stations, business flows for retrieving content are presently constituted by the below-mentioned sequences:

### (1) REGISTERATION

Registration refers to a sequence for registering video/audio content collected into a computer system.

A user plays the video/audio content stored in a tape medium by operating a dedicated player so as to view/hear these video/audio content. The user records both positional information (namely, time code) on a time axis of the content, and metadata (namely, content information) at such a portion on the content where the metadata is needed to be stored. The user inputs the recorded time code and metadata in a registration application program which is executed on a computer system. Alternatively, the above-described metadata recording work may be carried out on the computer system connected in the dedicated player. In this alternative case, the time code is acquired based upon a positional information acquiring command (time code acquiring command) on such a time axis provided in the dedicated player. The user inputs the metadata in the registration application program executed on the computer system by utilizing a keyboard. Then, the registration application program registers the recorded time code and metadata in a database server (DB server).

In the case of allowing the user to view/hear a content during retrieving operation, the user records both a time code and metadata, and at the same time, encodes the video/audio content stored in the tape medium into such a file format (MPEG etc.), and then, saves the data having the encoded file format in a file server. This file format can be saved and reproduced by the computer system.

### (2) RETRIEVING (VIEWING/HEARING) OPERATION

The retrieving operation refers to a sequence for seeking a content which the user wants from a plurality of contents.

The user inputs a keyword used to seek a desirable content into a retrieve application program executed on the commuter system. The retrieve application program retrieves metadata saved in the DB server. The retrieve application program displays a list of content in which a keyword character string is contained in the metadata. The user specifies the desirable content within the list. In the case where video/audio data has been formed during registration, the user plays this video/audio data on the computer system in order to confirm whether or not the video/audio is such an actually desirable content by the user.

As relevant technical ideas of the present invention, the below-mentioned techniques may be conceived:
- Streaming distribution technique:
   This streaming distribution technique implies such a technical idea that video/audio content is distributed from a server to a client present in a computer network. The client can start reproducing the content, while this client need not wait for such an operation that an entire portion of a file where the contents have been stored is downloaded.
- Digital pen technique:
   The digital pen technique refers to the below-mentioned writing tool. That is, while the writing tool saves various sorts of information: a handwriting written by a writer, a written position on a paper medium, text data recognized bused upon the handwriting, and a time instant when the writer writes the handwriting, this writing tool can transmit these sorts of information to a computer system in either a wireless manner or a wired manner.

A metadata registering method has been proposed in JP-A-2003-178076, and so on, as one example of an interactive type metadata input. That is, in this metadata registering method, when meta information is added to a content during a registering operation, an application program executed on a metadata registration terminal inquires with respect to a metadata registering person, and then, employs an answer of this interrogation as the meta information.

As previously described, very recently, content holders hold a very large number of video/audio contents. Since these video/audio content have been stored in tape media and/or hard disk media in various sorts of formats, business targets are realized by the following method. That is, these content may be effectively retrieved to be used, or may be provided to other content holders and/or content users. In order that content can be retrieved, when a user registers a content in a computer system, the user registers content explanatory information (namely, metadata) of this content at the same time.

In this connection, the following idea is considered. That is, metadata registering works of content are carried out by a plurality of persons and at a plurality of sites. In such a case that the content have been stored in a tape medium, dubbing works of content on the tape mediums are required, and those tape mediums must be moved. Also, it is necessarily required to confirm as if the content stored in the tape medium distributed to the respective metadata registering workers is identical to the content for registration of the metadata.

Even in such a case that content have been stored a hard disk medium, in such a system for downloading the content to computer systems of the metadata registering workers, the following confirmation works are similarly required: That is such a confirmation is required that the content downloaded in the computer systems of the respective metadata registering workers is identical to the content for registration of the metadata.

Also, in the case where a registering subject of metadata is set to a specific position on a time axis of the content, since a user must acquire this positional information on the time axis by paying his attention to this positional information, there are some possibilities that this positional information is mistakenly acquired.

Therefore, such a metadata registering method of content capable of solving the above-described problems has been needed.

As a method for registering metadata of a content by operating a digital pen, JP-A-2003-178076 has proposed such a method of "Image data adding and retrieving device." However, since this method utilizes the tape, this conventional method needs extra works such as copy and transfer of the tape, and the coincidence confirmation works.

The present invention seeks to provide a content metadata registering technique which may solve the above-described conventional problems, and also, which may acquire positional information of content on a time axis without any error so as to register metadata.

A content metadata registering system, according to an aspect of the present invention, is featured by that in such a content metadata registering system for registering metadata utilized during a retrieving operation at a specific position on a time axis of content, a time code at an input starting time instant of the metadata is calculated based upon information as to a content play log which contains a distribution starting time instant when the content is played, a time code when a distribution is commenced, a playing direction, and a playing speed. Thereafter, the calculated time code is registered in combination with the metadata.

In the content metadata registering system of the present invention, when the metadata as to the content is registered, such an object of maintaing the coincidence between the stored content and such a content to which the metadata should be registered may be achieved by the below-mentioned means:

First of all, a user encodes video/audio content which has been collected and has been stored in a tape medium into a file format (MPEG etc.) which can be saved and reproduced in a computer system, and then, saves the encoded content in a file server. When the encoded content is saved, while a registration application program is separately used, the user stores both a content ID for uniquely identifying a content and a storage destination file path of a file in the file server by stringing these items to each other.

Next, the user selects such a content to which the metadata should be registered by executing a playing application program operated on a client. The playing application program requests a streaming distribution server to streaming-distribute content based upon a content ID of this selected content.
Then, the streaming distribution server acquires a file path of a file having the content ID from the DB server, and streaming-distributes the acquired file to the client. Since the above-explained means are employed, even when a plurality of users perform metadata registering works with respect to a single content at a plurality of sites, it is possible to guarantee that the content viewed/heard by these plural users are identical to each other.

The object that the positional information of the specific position of the content on the time axis, to which the metadata is tried to be registered, is acquired without any error may be achieved by the following means:

Firstly, while the user requests a streaming distribution of a content by performing the above-described means, the user views/hears the content by executing the playing application program on the client. When the playing application program starts to reproduce the content, this playing application program notifies the following information to the streaming distribution server: namely, a system time of a time instant when the reproducing operation is commenced; positional information (if MPEG is employed, then time stamp is used etc.) of the content whose reproducing operation is commenced on the time axis; and a playing method (normal speed forward play, normal speed reverse play, twice-speed forward play, twice-speed reverse play, play stop etc.). Upon receipt of the notification, the client ID, the content identifier, the time stamp, and the playing method under reproduction are stored into the DB server as an content play log.

The user views/hears the streaming-distributed content by using the playing application program on the client. When such a scene where metadata is needed to be registered is displayed during the playing operation, the user writes the metadata on a paper medium by using a digital pen. The digital pen stores thereinto a handwriting written by the user, a writing position on the paper medium, the text data recognized from the handwriting, and also, the time instant when the user writes. The user connects the digital pen to the client in either a wireless manner or a wired manner so as to transmit these stored information to a computer system of the client. A registration application program executed on the client acquires the content ID, the reproduction starting position information, and the playing method of the content viewed/heard by this client from the DB server, and strings the handwriting, the writing position, and the text data transmitted from the digital pen to the specific position of the content on the time axis, which has been displayed in the writing time transmitted from the digital pen on the client screen as the metadata, and then displays this metadata on the screen. With execution of the present means, the user need not acquire registering time of the metadata with paying his attention. As a result, the present invention can achieve the above-described object that the positional information of the content on the time axis, to which the metadata is tried to be registered, is acquired without any error.

As previously described, in the content metadata registering system according to the present invention, since the video/audio content to which the metadata should be registered can be read out from one file, and the read content can be played by the client terminal of the respective metadata registering workers, no inconsistency problem will occure in regard to the content. Also, the writing time instant of the digital pen is defined as the specific position on the time axis as to the video/audio content to which the metadata should be registered. As a consequence, the positional information of the content on the time axis can be acquired without error.

In accordance with the present invention, the metadata can be registered, while the positional information of the content on the time axis can be acquired without error.

Other objects, features and advantages of the invention will become apparent from the following description of the embodiments of the invention taken in conjunction with the accompanying drawings.

IN THE DRAWINGS
Fig. 1 is a diagram for illustratively showing an example as to an appliance arrangement and a network, capable of registering video/audio content metadata by operating a digital pen in accordance with an embodiment of the present invention.
Fig. 2 is a diagram for representing an example of a contents list 117 stored in a storage apparatus 108 contained in a database server 106 according to the embodiment.
Fig. 3 is a diagram for indicating an example of a content play log list 115 stored in the storage apparatus 108 contained in the database server 106 according to the embodiment.
Fig. 4 is a diagram for indicating an example of a content metadata list 116 stored in the storage apparatus 108 contained in the database server 106 according to the embodiment.
Fig. 5 is a block diagram for showing a structure of a content play log registering function 113 realized on a streaming distribution server 104 according to the embodiment.
Fig. 6 is a block diagram for indicating a structure of a digital pen information transmitting function 111 realized on a streaming player terminal 101 according to the embodiment.
Fig. 7 is a block diagram for representing a structure of a metadata registering function 114 realized on a Web/AP server 105 according to the embodiment.

A description is made of a content metadata registering system according to an embodiment of the present invention. That is, in accordance with the content metadata registering system of the embodiment, a time code at a write starting time instant of metadata by operating a digital pen is calculated based upon information of a content play log when content distributed by streaming distributions is played, and then, the calculated time code is registered in combination with the metadata.

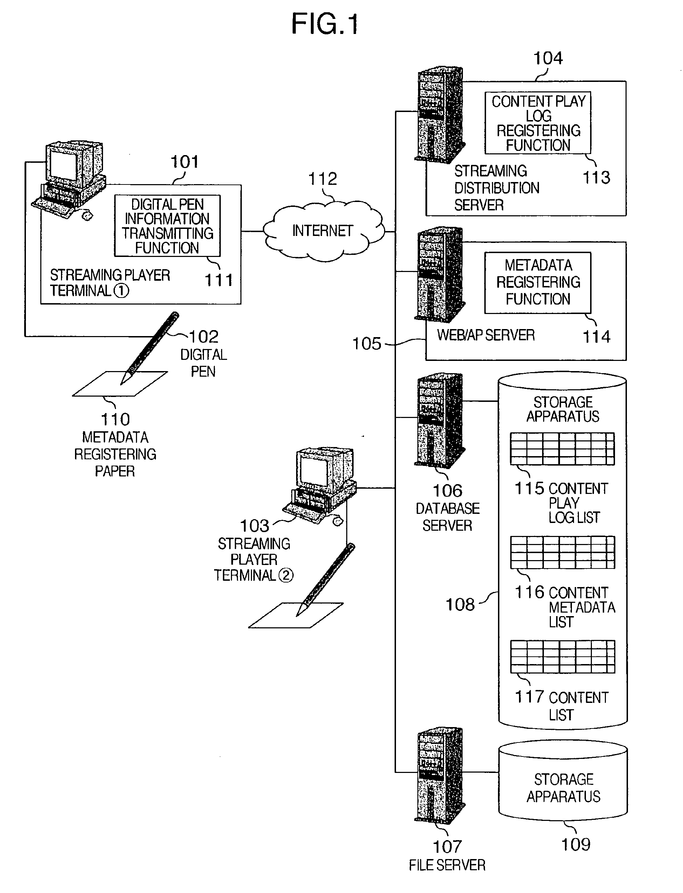

Fig. 1 is a diagram for illustratively showing an example as to an appliance arrangement and a network, capable of registering video/audio content metadata by operating a digital pen in accordance with the present embodiment of the present invention. The present invention is suitable for a video/audio content metadata registering method using the digital pen, as represented in Fig. 1.

Next, a description is made of a first process example: That is, in the present embodiment, adding of a record of an content play log list 115 stored in a storage apparatus 108 contained in a database server 106 is carried out only by an content play log registering function 113 of a streaming distribution server 104.

A user encodes video/audio content into file formats such as MPEG which can be saved and/or reproduced in a computer system, and then, stores the encoded content into a storage apparatus 109 contained in a file server 107, while the video/audio content has been collected and stored in tape media. When the encoded content is saved in the above-described computer system, a registration application program is used on the computer system; for stringing content ID capable of uniquely identifying the content and storage destination path of the file; and then, records are additionally provided in a contents list 117 stored in the storage apparatus 108 contained in the database server 106.

Subsequently, the user initiates an playing application program on a computer system of either a streaming player terminal 101 or a streaming player terminal 103. The user designates such a content which should be an object of metadata registration on the playing application program. In order to designate such the content, the user directly inputs a content ID, or displays the records of the contents list 117 on the playing application program so as to designate the content. The playing application program requests a streaming distribution server 104 to perform a streaming distribution of content based upon the content ID of this selected content.

The streaming distribution server 104 acquires a path of a file having the above-described content ID from the contents list 117 stored in the storage apparatus 108 contained in the database server 106. The streaming distribution server 104 reads the relevant file stored in the storage apparatus 109 contained in the file server 107, and then, streaming-distributes the content to either the streaming player terminal 101 or the streaming player terminal 103.

A content play log registering function 113 of the streaming distribution server 104 strings the below-mentioned items to each other, and adds records in a content play log list 115 stored in the storage apparatus 108 contained in the database server 106. The above-described items are a content ID; a terminal ID for uniquely identifying a streaming player terminal; a distribution starting time instant at which a streaming distribution is commenced; a time code equal to positional information on a time axis of a content which has been streaming-distributed; a playing direction of the content (namely, content is reproduced along forward direction, or reverse direction); and a playing speed (reproduction stop corresponds to playing speed = 0) of the content.

When the user moves a reproducing position on the content, changes a playing direction, or changes a playing speed (reproduction stop corresponds to change to playing speed = 0) on the playing application program, the playing application program notifies the change of the reproducing position on the content, the change of the playing direction, or the change of the playing speed respectively to the streaming distribution server 104. The streaming distribution server 104 performs a streaming distribution in correspondence with the above-explained notification. The content play log registering function 113 of the streaming distribution server 104 strings the content ID, the terminal ID, the distribution starting time instant, the time code, the playing direction, and the playing speed to each other, and then, adds a record to the content play log list 115 stored in the storage apparatus 108 contained in the database server 106.

The user views/hears content based upon the playing application program executed on the streaming player terminal by operating the above-described means. When such a scene is displayed for which metadata is needed to be registered while the content is played, the user describes such a content which is needed to be registered as the metadata on metadata registration paper 110 by operating the digital pen 102. The digital pen 102 saves therein handwriting data written by the user, a write starting position on the written metadata registration paper 110, text data recognized from the handwriting, and a write starting time instant. When the user connects the digital pen 102 to the streaming player terminal in either a wireless manner or a wired manner, the write starting time instant, the write starting position, the text data, and the handwriting data are transmitted to the streaming player terminal. In this example, it is so assumed that since a writing operation is carried out by the digital pen 102 at a specific position on the registration paper 110, a start and an end of the writing operation can be discriminated.

A digital pen information transmitting function 111 realized on the streaming player terminal 102 transmits the terminal ID to be used for uniquely identifying the streaming player, the write starting time instant, the write terminal 101 starting position, the text data, and the handwriting data to the Web/AP server 105. The handwriting data is once outputted as an image file, and thereafter, the image file is transmitted to the Web/AP server 105 by way of either FTP (File Transfer Protocol) or a file copy.

A metadata registering function 114 realized on the Web/AP server 105 receives the data transmitted from the digital pen information transmitting function 111. The metadata registering function 114 stores the image file of handwriting data in the storage apparatus 109 contained in the file server 107, and acquires a file path of the handwriting data. Also, the metadata registering function 114 acquires the content ID, the distribution start time instant, the time code reproduction starting positional information, and the playing method as to the content played by the relevant streaming player terminal from the content play log list 115 stored in the storage apparatus 108 contained in the database server 106. Then, the metadata registering function 114 calculates a time code of the content reproduced by this streaming player terminal at the write starting time instant based upon the distribution start time instant, the playing direction, and the playing speed from the content play log list 115. The metadata registering function 114 strings the content ID, the time code, the test data, the file path of the handwriting data, and the handwriting start position to each other based upon the calculated time code, and adds a record in the content metadata list 116 stored in the storage apparatus 108 contained in the database server 106.

In the above-described first process example, adding of the record in the content play log list 115 stored in the storage apparatus 108 contained in the database server 106 has been performed only by the content play log registering function 113 of the streaming distribution server 104. Alternatively, as will be explained in the below-mentioned second process example, the streaming distribution server 104 may execute the record adding operation in conjunction with a playing application program executed on a streaming player terminal. In the second process example, a record of the content play log list 115 can be more correctly produced, as compared with that of the above-described first process example. As a result, the time code, the text data, the file path of the handwriting data, and the write starting position in the record of the content metadata list 116 can be more correctly strung to each other.

Subsequently, the second process example is described as follows: That is, when the playing application program executed on the streaming player terminal starts to reproduce a content distributed from the streaming distribution server 104, this playing application program notifies a reproduction starting time instant when the reproduction is started, a time code on the content whose reproduction is started, a playing direction of the content, and a playing speed (reproducing stop corresponds to playing speed = 0) of the content to the streaming distribution server 104. The content play log registering function 113 of the streaming distribution server 104 receives this notification, and then, adds a record to the content play log list 115 stored in the storage apparatus 108 contained in the database server 106.

When the user moves a reproducing position on the content, changes a playing direction, or changes a playing speed (reproduction stop corresponds to change to playing speed = 0) on the playing application program, the playing application program notifies the change of the playing position on the content, the change of the playing direction, or the change of the playing speed respectively to the streaming distribution server 104. The streaming distribution server 104 performs a streaming distribution in correspondence with the above-explained notification. When the playing application program executed on a streaming player terminal starts to play a content distributed from the streaming distribution server 104, this playing application program notifies a reproduction starting time instant when the reproduction of the content is started, a time code on the content whose reproduction is started, a playing direction of the content, and a playing speed of the content to the streaming distribution server 104. The content play log registering function 113 of the streaming distribution server 104 receives this notification, strings the content ID, the terminal ID, the distribution starting time instant, the time code, the playing direction, the playing speed each other and then, adds a record to the content play log list 115 stored in the storage apparatus 108 contained in the database server 106.

In the above-described two process examples, adding of the record of the content metadata list 116 stored in the storage apparatus 108 contained in the database server 106 has been performed only by the metadata registering function 114. Alternatively, as will be described in a third process example, the metadata registering function 114 may execute the record adding operation in conjunction with the digital pen information transmitting function 111 executed on a streaming player terminal. Although the user cannot confirm such a time code to which the text data, the handwriting data, and the handwriting start position are strung in the first and the second process examples, this confirmation can be realized in the third process example.

Next, a description is made of the third process example. That is, the digital pen information transmitting function 111 executed on the streaming player terminal acquires a content ID, a distribution start time instant, time code reproduction starting positional information, and a playing method as to a content played by the relevant streaming player terminal from the content play log list 115 stored in the storage apparatus 108 contained in the database server 106.

Then, the digital pen information transmitting function 111 calculates a time code of the content reproduced by this streaming player terminal at the write starting time instant received from the digital pen 102 based upon the distribution starting time instant, the playing direction, and the playing speed from the content play log list 115, and then displays the content ID, the time code, the text data, the handwriting data, and the handwriting start position on an application program executed on the streaming player terminal.

When the user confirms this event and issues a transmission process trigger, the digital pen information transmitting function 111 transmits information as to the content ID, the time code, the text data, the handwriting data, and the handwriting start position to the Web/AP server 105. The handwriting data is once outputted as an image file, and thereafter, the image file is transmitted to the Web/AP server 105 by way of either an FTP or a file copy.

The metadata registering function 114 executed on the Web/AP server 105 receives the data transmitted from the digital pen information transmitting function 111. The metadata registering function 114 stores the image file of the handwriting data into the storage apparatus 109 contained in the file sever 107. Also, the metadata registering function 114 adds the received data as a record to the content metadata list 116 stored in the storage apparatus 108 contained in the database server 106.

In the present embodiment, it is so assumed that programs recorded on a recording medium such as a CD-ROM, which cause a computer to execute the above-described functions are stored in a magnetic disk, and thereafter, is loaded on a memory so as to be executed. It should also be noted that the recording medium for recording thereon the above-described programs may be other recording medium than the CD-ROM. Alternatively, the above-explained programs may be installed from this recording medium to an information processing apparatus, or may be accessed via a network to the above-described recording medium so as to be used.

It is also assumed that the streaming player terminal 101, the streaming player terminal 103, the streaming distribution server 104, the Web/AP server 105, the database server 106, and the file server 107, which correspond to the information processing apparatus of the present embodiment, may be equipped with the below-mentioned hardware resources: Namely, a CPU (Central processing Unit), a memory, a magnetic disk apparatus, an input apparatus, an output apparatus, a communication apparatus, and the like.
The CPU executes the program for causing the computer to execute the above-described functions, the streaming distribution process, and OS (Operating System). Into the memory, the program is loaded, and data are temporarily stored during execution. The magnetic disk apparatus stores thereinto these programs and the above-described information. The input apparatus accepts an operation instruction and an input of data. The output apparatus outputs various sorts of information. The communication apparatus is communicated with other computers.

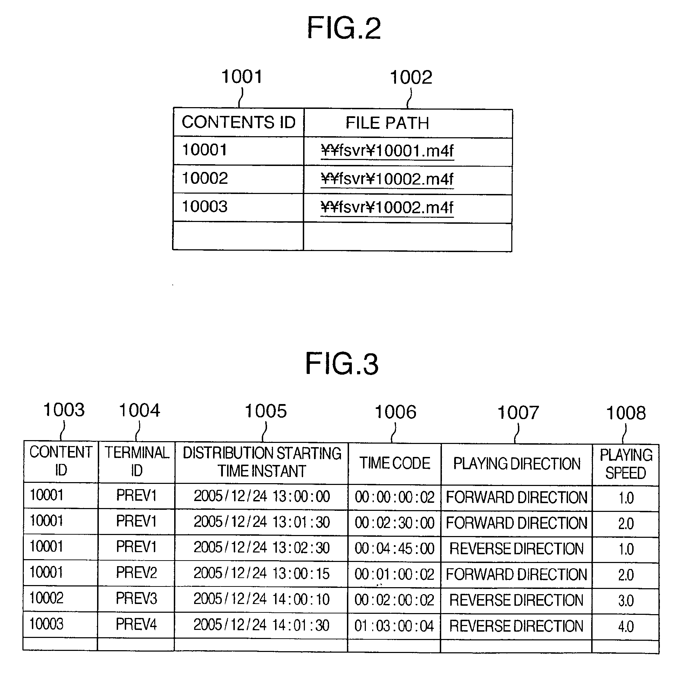

Fig. 2 is a diagram for showing an example as to the contents list 117 stored in the storage apparatus 108 contained in the database server 106 of the present embodiment. As shown in Fig. 2, in the present embodiment, when the user encodes video/audio content for which metadata should be registered into such a format which can be saved/reproduced in a computer system so as to save the encoded content in the file server 107, at the same time, the user strings a content ID 1001 for uniquely identifying a content to a file path 1002 (showing the storage destination of file) and stores the content ID 1001 together with the file path 1002 in the contents list 117 by using the registration application program. As to contents IDs, identifiers capable of uniquely specifying the contents may be automatically produced in a sequential manner for example. It is so assumed that the file paths have such formats (¥¥ server name ¥ shared folder name ¥ file name) to which another computer system present on the network can access.

After the content ID 1001 and the file path 1002 have been stored in the contents list 117, when the user selects the content for which the metadata should be registered on an playing application program, the playing application program derives a record of the contents list 117 and displays thereon the derived record in order to cause the user to designate the content.

Also, the streaming distribution server 104 acquires a path of a file having the above-described content ID from the contents list 117. The streaming distribution server 104 reads out such a content file having this file path, and then, streaming-distributes the content to a streaming player terminal.

Fig. 3 is a diagram for showing an example of the content play log list 115 stored in the storage apparatus 108 contained in the database server 106 of the present embodiment. As shown in Fig. 3, in-the above-described first process example, when the streaming distribution server 104 commences the streaming distribution to the streaming player terminal, the streaming distribution server 104 stores a content ID 1003 of a content to be streaming-distributed; a terminal ID 1004 for uniquely specifying the streaming player terminal; a distribution starting time instant 1005 at which the streaming server starts to distribute the content; a time code 1006 which indicates positional information on the content time axis where the playing operation of the content is commenced; a playing direction 1007 which indicates whether the content is reproduced along the same direction as the content time axis, or along the reverse direction thereof; and a playing speed 1008 which is expressed as a ratio of the normal playing speed of the content, while these items are strung to each other and stored. For instance, in such a case that a content is reproduced for 120 seconds while the normal time taken is 60 seconds, it is so assumed that the playing speed 1008 is 2.0. When the reproducing operation is stopped, it is so assumed that the playing speed 1008 is 0. In this example, it is so assumed that the distribution starting time instant 1005 indicates day/time when the distribution is commenced in the corresponding playing direction 1007 and at the playing speed 1008.

Also, in the above-described second process example, when the streaming distribution server 104 commences the streaming distribution to the streaming player terminal, the streaming player terminal receives it, and commences a reproducing operation in the terminal, the streaming player terminal notifies the distribution starting time instant 1005 when the terminal starts the reproducing operation, the time code 1006, the playing direction 1007, and the playing speed 1008 to the streaming distribution server 104. The streaming distribution server 104 receives the above-described data and strings these received data to each other, and then, stores the strung data in the content play log list 115.

Further, in the first process example, when the user designates a move instruction of a reproducing position; a fast forward instruction; a fast rewind instruction; a frame by frame forward instruction; a frame by frame rewind instruction; or a reproduction stop instruction on the content time axis through a playing application program on a streaming player terminal, the above-described instruction is notified to the streaming distribution server 104. The streaming distribution server 104 starts a streaming distribution in accordance with the notified instruction to the streaming player terminal, and stores the content ID 1003, the terminal ID 1004, the distribution starting time instant 1005, the time code 1006, the playing direction 1007, and the playing speed 1008 by string these items to each other.

Also, in the second process example, when the user designates a move instruction of a reproducing position; a trick reproducing instruction; or a reproduction stop instruction on the content time axis through the playing application program on the streaming player terminal 101, the above-described instruction is notified to the streaming distribution server 104. The streaming distribution server 104 starts a streaming distribution in accordance with the notified instruction to the streaming player terminal. When the streaming player terminal receives the streaming distributed content and starts a reproducing operation, this streaming player terminal notifies the distribution starting time instant 1005 at which the own terminal starts the reproducing operation, the time code 1006, the playing direction 1007, and the playing speed 1008 to the streaming distribution server 104. Then, the streaming distribution server 104 receives the above-described data and strings these data to each other, and thereafter, stores the strung data in the content play log list 115.

Moreover, in the above-explained first process example, in order that the metadata registering function 114 realized on the Web/AP server 105 calculates that which time code portion contained in which content has been reproduced on the streaming player terminal at a write starting time instant of the digital pen 102 transmitted from the digital pen information transmitting function 111 realized on this steaming player terminal, this metadata registering function 114 retrieves and acquires record having the ID of the relevant streaming player terminal present just before this write starting time from the content play log list 115. The metadata registering function 114 determines that the text data, the handwriting data, and the write starting position, which are transmitted from the digital pen information transmitting function 111, are strung to which time code on the content based upon the distribution starting time instant 1005, the time code 1006, the playing direction 1007, and the playing speed 1008 of the acquired record.

Also, in the above-described third process example, in order that the digital pen information transmitting function 111 realized on the streaming player terminal calculates that which time code portion contained in which content has been reproduced on this streaming player terminal at a write starting time instant of the digital pen 102, this digital pen information transmitting function 111 retrieves and acquires record having the ID of the relevant streaming player terminal just before this write starting time from the content play log list 115. The digital pen information transmitting function 111 determines that the text data, the handwriting data, and the write starting position of the digital pen 102 are strung to which time code on the content based upon the distribution starting time instant 1005, the time code 1006, the playing direction 1007, and the playing speed 1008 as to the acquired record.

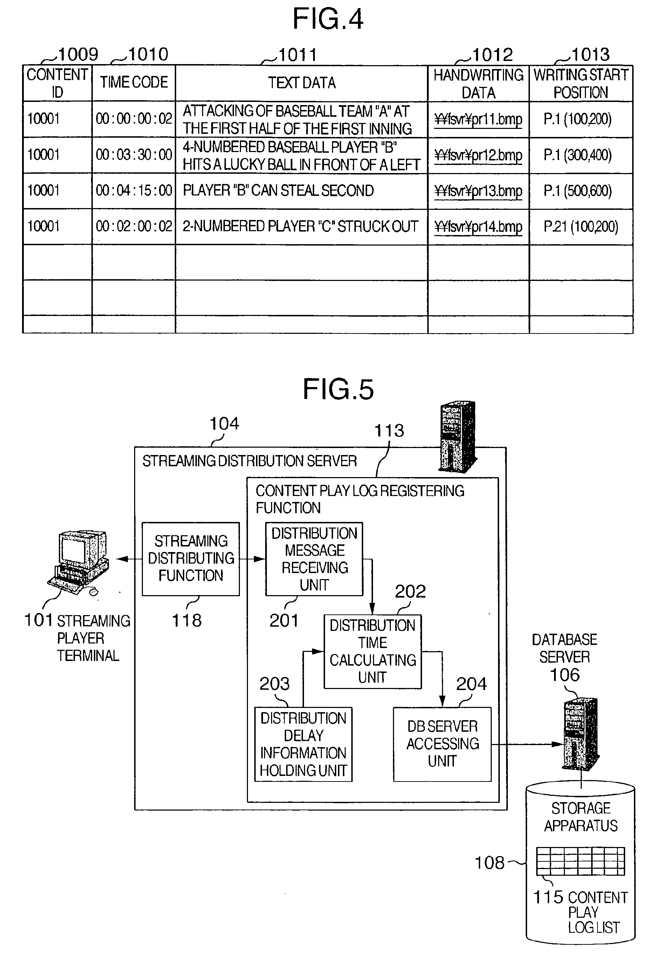

Fig. 4 is a diagram for representing an example as to the content metadata list 116 stored in the storage apparatus 108 contained in the database server 106 of the present embodiment. As shown in Fig. 4, in the present embodiment, the metadata registering function 114 realized on the Web/AP server 105 stores contents IDs 1009; time codes 1010 corresponding to positions on the content time axis where metadata are registered; text data 1011 recognized from handwriting written by digital pens; file paths 1012 of handwriting data files into which the handwritings written by the digital pens are stored as images; and write starting positions 1013 at which the digital pens start writing by stringing these items to each other.

After these items have been stored, when the data inputted by the user is transmitted as a retrieving-purpose character string by executing a content retrieving application program executed on a computer system, a retrieving program on the Web/AP server 105 retrieves the contents within the text data 1011 of the contents metadata list 116, and displays a list of the contents having the text data 1011.

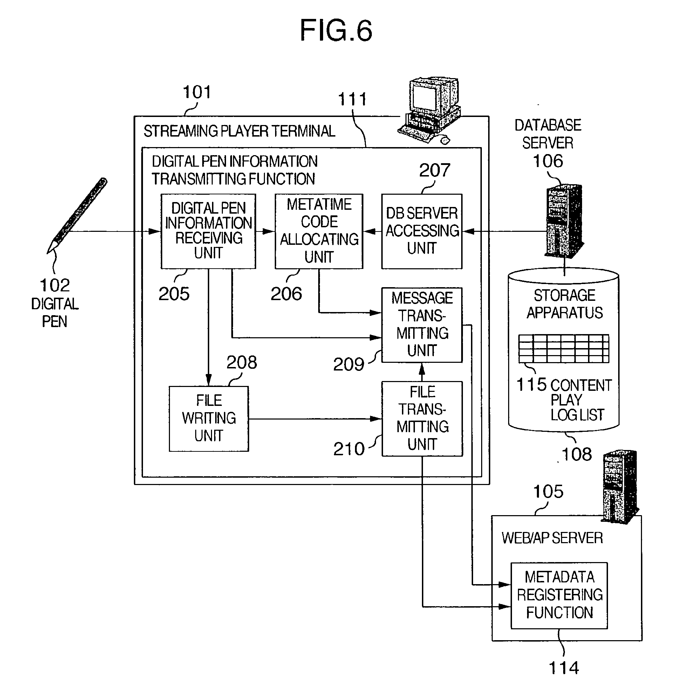

Fig. 5 is a diagram for showing a structure of the content play log registering function 113 realized on the streaming distribution server 104 of the present embodiment. As shown in Fig. 5, the streaming distribution function 118 on the streaming distribution server 104 performs a streaming distribution to the streaming player terminal 101 in response to the below-mentioned commands of a certain content issued from the streaming player terminal 101. These commands are a reproduction request command, a move command of a reproducing position on the content, a change command of a playing direction, and a change command of a playing speed.

In the case of the above-described first process example, the streaming distribution function 118 notifies a distribution message receiving unit 281 of the content play log registering function 113 of a content ID, a terminal ID, a distribution starting time, a time code, a playing direction, and a playing speed. The distribution message receiving unit 201 notifies a distribution time calculating unit 202 of the content ID, the terminal ID, the distribution starting time, the time code, the playing direction, and the playing speed.

The distribution starting time instant received by the distribution time calculating unit 202 corresponds to such a time when the streaming distribution function 118 has distributed a position having the above-described time code on the time axis of the content, but does not correspond to such a time at which the streaming player terminal 101 has commenced the reproducing operation, namely, is not such a time when an user views/hears the position of the content having the relevant time code. This delay time is determined based upon distribution delays occurred in a distribution buffer employed on the side of the streaming distribution function 118 and on a network, and also based upon a parameter of a reception buffer employed on the side of the streaming player terminal 101 etc. A distribution delay information saving unit 203 has previously stored this delay time as a data file in the file system of the streaming distribution server 104 as a file. The distribution time calculating unit 202 acquires this distribution delay time from the distribution delay information saving unit 203, and adds the acquired distribution delay time to the distribution starting time instant obtained from the distribution message receiving unit 201, and then defines the calculated result as a new distribution starting time instant. Then, the distribution time calculating unit 202 notifies a DB server access unit 204 of the content ID, the terminal ID, the newly calculated distribution starting time, the time code, the playing direction, and the playing speed. The DB server access unit 204 adds those received data by being strung to the content play log list 115 stored in the storage apparatus 108 contained in the database server 106.

In the case of the above-explained second process example, when the streaming player terminal 101 starts to reproduce the streaming-distributed content, the streaming player terminal 101 notifies the streaming distribution function of the streaming distribution server 104 of a content ID, a terminal ID, a distribution starting time, a time code, a playing direction, and a playing speed. The distribution message receiving unit 201 notifies a distribution time calculating unit 202 of the content ID, the terminal ID, the distribution starting time, the time code, the playing direction, and the playing speed.

The distribution starting time instant received by the distribution time calculating unit 202 corresponds to such a time at which the streaming player terminal 101 starts the reproducing operation, namely, such a time when the user views/hears the content having this time code. As a consequence, in this second process case, there is no time delay. The distribution time calculating unit 202 notifies the DB sever access unit 204 of the content ID, the terminal ID, the distribution starting time, the time code, the playing direction, and the playing speed. The DB server access unit 204 adds those received data by being strung to the content play log list 115 stored in the storage apparatus 108 contained in the database server 106.

Fig. 6 is a diagram for showing a structure as to the digital pen information transmitting function 111 realized on the streaming player terminal 101 according to the present embodiment. As indicated in Fig. 6, when the user connects the digital pen 102 to the streaming player terminal 101 in either a wireless manner or a wired manner, a digital pen information receiving unit 205 of the digital pen information transmitting function 115 acquires a handwriting written by the user, a position on a paper medium on which the user writes, text data recognized from the handwriting, and a time instant at which the user writes from the digital pen 102.

In the case of the above-described first process example, the digital pen information receiving unit 205 transfers data about the handwriting written by the user to a file writing unit 208. The file writing unit 208 writes this transferred data in an image file, and then, transfers this image file to a file transmitting unit 210. The file transmitting unit 210 uploads this transferred image file to the Web/AP server 105 by an FTP, or a file copy, and saves a file path of the upload destination.

The digital pen information receiving unit 205 notifies a message transmitting unit 209 of a write starting position where the user writes, a write starting time instant, and text data which is recognized from a handwriting. The message transmitting unit 209 acquires the file path of the uploaded image file from the file transmitting unit 210, and then, notifies the metadata registering function 114 realized on the Web/AP server 105 of the terminal ID of the relevant streaming player terminal, the write starting time instant, the write starting position, the text data, and the file path of the image file.

In the case of the above-described third process example, the digital pen information receiving unit 205 transfers data about the handwriting written by the user to a file writing unit 208. The file writing unit 208 writes this transferred data in an image file, and then, transfers this image file to a file transmitting unit 210. The file transmitting unit 210 uploads this transferred image file to the Web/AP server 105 by an FTP, or a file copy, and saves a file path of the upload destination.

The digital pen information receiving unit 205 notifies a metatime code allocating unit 206 of a write starting position where the user writes, a write starting time instant, and text data which is recognized from a handwriting. The metatime code allocating unit 206 requests a DB server access unit 207 to acquire such an content play log record which relates to the content distributed to the relevant streaming player terminal and has been stored in the content play log just before the write starting time instant.

The DB server access unit 207 acquires a distribution starting time instant, a time code, a playing direction, and a playing speed from such a content play log record which relates to the content distributed to the streaming player terminal from the content play log list 115 stored in the storage apparatus employed in the database server 106, and has been stored in the content play log just before the write starting time instant. Then, the DB server access unit 207 notifies these acquired data to the metatime code allocating unit 206.

The metatime code allocating unit 206 calculates a position of a content reproduced by the streaming player terminal at the write starting time instant. The calculation is performed as follow. The metatime code allocating unit 206 firstly subtracts the distribution starting time instant from the write starting time instant so as to calculate an elapse of time from the distribution starting time instant up to the write starting time. Furthermore, the metatime code allocating unit 206 multiplies the elapsed time by the playing speed, and moreover, multiplies the multiplied result by "-1" in the case where the playing direction is the reverse direction, in order to calculate a move time within elapsed time, namely to calculate: how long the reproducing position on the streaming player terminal has been moved within the elapsed time on the content time axis. In the case that a playing speed of the just before content play log record is "0" (reproduction is stopped), the move time within elapsed time becomes zero because "0" is multiplied. Finally, the metatime code allocating unit 206 adds this move time within elapsed time to the time code so as to acquire a time code on the time axis of such a content which was reproduced by the streaming player terminal at the time instant when the user wrote by using the digital pen 102.

The metadata code allocating unit 206 notifies the content ID, the calculated time code, the text data, and the write starting position to the message transmitting unit 209. The message transmitting unit 209 acquires the file path of the uploaded image file from the file transmitting unit 210. The message transmitting unit 209 notifies the content ID, the calculated time code, the text data, and the write starting position, and also, the file path of the image file to the metadata registering function 114 realized on the Web/AP server 105.

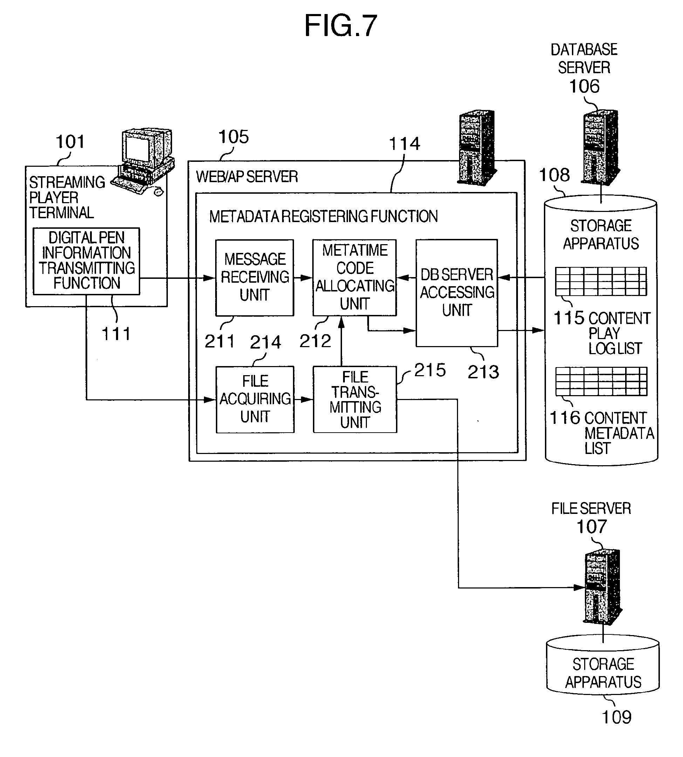

Fig. 7 is a diagram for indicating a structure as to the metadata registering function 114 realized on the Web/AP server 105. As indicated in Fig. 7, in the case of the above-described first process example, a message receiving unit 211 receives the terminal ID, the write starting time instant, the write starting position, the text data, and the file path of the image file from the digital pen information transmitting function 111 realized on the streaming player terminal 101.

A file acquiring unit 214 acquires such the image file which is uploaded from the digital pen information transmitting function 111 realized on the streaming player terminal 101, and then, transfers the acquired image file to a file transmitting unit 215. The file transmitting unit 215 uploads this transferred image file to the file server 107 by either the FTP or a file copy, and saves a file path of the upload destination.

The message receiving unit 211 notifies the terminal ID, the write starting time instant, the write starting position, and the text data to the metatime code allocating unit 212. The metadata code allocating unit 212 requests a DB server access unit 213 to acquire such an content play log record which relates to the content distributed to the relevant streaming player terminal having the above-described terminal ID and has been stored into the content play log just before the write starting time instant.

The DB server access unit 213 acquires a distribution starting time instant, a time code, a playing direction, and a playing speed from such an content play log record which relative to the content distributed to this streaming player terminal, and has been stored in the content play log just before the write starting time instant in the content play log list 115 saved in the storage apparatus 108 contained in the database server 106. Then, the DB server access unit 213 notifies the acquired items to the metatime code allocating unit 212.

The metatime code allocating unit 212 calculates a position of a content reproduced by the streaming player terminal at the write starting time instant. The calculation is performed as follow. The calculation is performed as follow. The metatime code allocating unit 206 firstly subtracts the distribution starting time instant from the write starting time instant so as to calculate an elapse of time from the distribution starting time instant up to the write starting time. Furthermore, the metatime code allocating unit 206 multiplies the elapsed time by the playing speed, and moreover, multiplies the multiplied result by "-1" in the case where the playing direction is the reverse direction, in order to calculate a move time within elapsed time, namely to calculate: how long the reproducing position on the streaming player terminal has been moved within the elapsed time on the content time axis. In the case that a playing speed of the just before content play log record is "0" (reproduction is stopped), the move time within elapsed time becomes zero because "0" is multiplied. Finally, the metatime code allocating unit 216 adds this move time within elapsed time to the time code so as to acquire a time code on the time axis of such a content which was played by the streaming player terminal at the time instant when the user wrote by using the digital pen 102.

The metadata code allocating unit 212 acquires the file path of the uploaded image file from the file transmitting unit 215. The metatime code allocating unit 212 notifies the content ID, the calculated time code, the text data, and the write starting position, and also, the file path of the image file to the DB server access unit 213. The DB server access unit 213 stores the content ID, the calculated time code, the text data, and the write starting position, and also, the file path of the image file to the content metadata list 116 stored in the storage apparatus 108 contained in the content metadata list server 106 by stringing these data to each other.

In the case of the above-described third process example, the message receiving unit 211 receives the content ID, the time code, the write starting position, the text data, and the file path of the image file from the digital pen information transmitting function 111 realized on the streaming player terminal 101.

The file acquiring unit 214 acquires such the image file which is uploaded from the digital pen information transmitting function 111 realized on the streaming player terminal 101, and then, transfers the acquired image file to the file transmitting unit 215. The file transmitting unit 215 uploads this transferred image file to the file server 107 by either the FTP or a file copy, and saves a file path of the upload destination.

The message receiving unit 211 notifies the content ID, the time code, the write starting position, the text data, and the file path of the image file to the metatime code allocating unit 212. The metadata code allocating unit 212 acquires the file path of the uploaded image file from the file transmitting unit 215.

The metadata code allocating unit 212 notifies the content ID, the calculated time code, the text data, and the write starting position, and also, the file path of the image file to the DB server access unit 213. The DB server access unit 213 stores the content ID, the calculated time code, the text data, the write starting position, and the file path of the image file in the content metadata list 116 stored in the storage apparatus 108 contained in the database server 106 by stringing these data to each other.

As previously described, in accordance with the content metadata registering system according to the present embodiments, the time code at the starting time when the metadata is inputted is calculated based upon the information as to the content play log which contains the distribution starting time instant when the content is played; and the time code, the playing direction, and the playing speed when the distribution is commenced. Then, the calculated time code is registered in combination with the metadata. As a result, while the positional information on the time axis of the content can be acquired without any error, the metadata can be registered.

It should be further understood by those skilled in the art that although the foregoing description has been made on embodiments of the invention, the invention is not limited thereto and various changes and modifications may be made without departing from the spirit of the invention and the scope of the appended claims, as interpreted by the description and drawings.

## Claims

1. A content metadata registering method for registering metadata utilized during a retrieving operation at a specific position on a time axis of content, comprising:
a step for storing a content play log into a storage apparatus (108), wherein said content play log containing a distribution starting time instant when the content is played, a time code when a distribution is commenced, a playing direction, and a playing speed;
a step for storing information into a storage apparatus (109), wherein said information contains an input starting time instant of the metadata and the inputted metadata; and
a step for calculating a time code at the input starting time instant of the metadata stored in said storage apparatus (109) based upon the information of the content play log stored in said storage apparatus (108), and for registering said metadata in combination with said calculated time code into the storage apparatus (108).

2. A content metadata registering method as claimed in claim 1 wherein:
since a streaming distribution is carried out based upon a content identifier of a selected content, said selected content is distributed to an information processing apparatus (101, 103) provided on the content player side.

3. A content metadata registering method as claimed in claim 1 wherein:
an input of the metadata is accepted by a digital pen (102), and the inputted metadata is stored into a storage apparatus of the digital pen (102) in combination with the input starting time instant of said metadata, and thereafter, information which contains said input starting time instant of said metadata and said accepted metadata is transmitted by a communication apparatus (111).

4. A content metadata registering method as claimed in claim 1 wherein:
both the distribution starting time instant when the content is played, and the time code when the distribution is commenced are produced in an information processing apparatus provided on the content distributing side, and said content play log is stored in said storage apparatus (108).

5. A content metadata registering method as claimed in claim 1 wherein:
both the distribution starting time instant when the content is played, and the time code when the distribution is commenced are produced in an information processing apparatus provided on the content player side, and said content play log is stored in said storage apparatus (108).

6. A content metadata registering method as claimed in claim 1 wherein:
the time code at the input starting time instant of the metadata is calculated based upon the information of said content play log by the information processing apparatus provided on the metadata registering side, and then, said metadata is registered in the storage apparatus in combination with said calculated time code.

7. A content metadata registering method as claimed in claim 1 wherein:
the time code at the input starting time instant of the metadata is commenced is calculated based upon the information of said content play log by the information processing apparatus provided on the content player side, and then, said metadata is registered in the storage apparatus in combination with said calculated time code.

8. A content metadata registering system for registering metadata utilized during a retrieving operation at a specific position on a time axis of content, comprising:
a content play log registering function (113) for storing a content play log into a storage apparatus (108), wherein said content play log containing a distribution starting time instant when the content data is played, a time code when a distribution is commenced, a playing direction, and a playing speed;
an information transmitting function (209, 210) for storing information which contains both an input starting time instant of the metadata and the inputted metadata into a storage apparatus (109) and for transmitting said information by a communication apparatus; and
a metadata registering function (114) for calculating a time code at the input starting time instant of the metadata stored in said storage apparatus (109) based upon the information of the content play log stored in said storage apparatus (108), and for registering said metadata in combination with said calculated time code into the storage apparatus (108).

9. A program for causing a computer to execute a content metadata registering method for registering metadata utilized during a retrieving operation at a specific position on a time axis of content, wherein:
said program causes the computer to execute:
a step for storing a content play log into a storage apparatus (108), wherein said content play log containing a distribution starting time instant when the content is played, a time code when a distribution is commenced, a playing direction, and a playing speed;
a step for storing information into a storage apparatus (109), wherein said information contains an input starting time instant of the metadata and the inputted metadata; and
a step for calculating a time code at the input starting time instant of the metadata stored in said storage apparatus (109) based upon the information of the content play log stored in said storage apparatus (108), and for registering said metadata in combination with said calculated time code into the storage apparatus (108).
